# EUROPEAN PATENT APPLICATION

(11) **EP 3 367 154 A1**
(43) Date of publication of application: **29.08.2018**
(21) Application number: 16857501.7
(22) Date of filing: 20.10.2016
(51) Int. Cl.: G02B 23/02, G02B 7/06, G02B 7/12

(54) **BINOCULARS**

(30) Priority: 20.10.2015 JP 2015206159
(71) Applicant: Nikon Vision Co., Ltd., Tokyo 142-0043 (JP)
(72) Inventor: NAKAMURA, Masahiro, Tokyo 142-0043 (JP)
(74) Representative: Viering, Jentschura & Partner mbB Patent- und Rechtsanwälte
(86) International application number: PCT/JP2016/081068
(87) International publication number: WO 2017/069188

(57) **Abstract**

[Problem]

To enable optical axes of right and left optical systems to be precisely adjustable in horizontal and vertical directions with respect to a user's viewpoint.

[Solving means]

Binoculars (1) include a pair of lens barrels (5) including focus lenses (14) and a pair of optical axis modifiers (9) disposed between the pair of lens barrels and cause each of the lens barrels to rotate in a direction in which a distance between the pair of lens barrels is changed for at least one end thereof.

## Description

### Technical Field

The present invention relates to binoculars.

### Background Art

Binoculars include a pair of right and left lens barrels that hold respective optical systems, and are capable of adjusting a width between the right and the left lens barrels in accordance with a user's pupil distance. In a case where binoculars are adjusted for a pupil distance, for example, if right and left optical axes are misaligned, these misaligned optical axes cause the user's eyes to get tired when convergence adjustment ability of the user's eyes is overwhelmed. To avoid this problem, such standards are provided that specify tolerance of misalignment of right and left optical axes. In ISO14133-1, JIS7313, and other standards, general-use ten-power binoculars are required that parallelism of the right and the left optical axes be within 3 minutes for vertical divergence of the optical axes, within 10 minutes for horizontal divergence of the optical axes, and within 4 minutes for horizontal convergence of the optical axes.

When an object in a short distance is viewed by naked eyes, an angle between light beams incident on the right and the left eyes (convergence angle) is large. In this case, when the object is captured in the respective centers of the sight fields of the right and the left eyes, images of the object from the viewpoints of the right and the left eyes are fused (overlapped), so that the object is recognizable as a single image. Binoculars are useful for not only a long-distance view but also a short-distance view. However, when the right and the left optical axes of the binoculars are kept in parallel, images of an object from the right and the left viewpoints are each shifted toward the nose from the centers of the sight fields of the right and the left eyes. Consequently, fusing the images obtained from the viewpoints of the right and the left eyes needs a large convergence angle in accordance with magnification, and this largely burdens the eyes. In this case, some users are not able to fuse images obtained from the right and the left viewpoints. Under such circumstances, binoculars have been developed that use a decentering means to change a distance between objective optical systems in conjunction with a focusing mechanism so as to correct a convergence angle between the right and the left optical axes in a short distance (see Patent Literature 1 below, for example).

### Citation List

### Patent Literature

[Patent Literature 1] Japanese Patent No. 3189328

### Summary of Invention

### Solution to Problem

Binoculars to solve the above-described problem include a pair of lens barrels including focus lenses, and a pair of optical axis modifiers disposed between the pair of lens barrels and cause each of the lens barrels to rotate in a direction in which a distance between the lens barrels is changed for at least one end thereof.

### Brief Description of the Drawings

Fig. 1 includes diagrams illustrating an example of binoculars according to a first embodiment.
Fig. 2 includes diagrams illustrating an example of binoculars.
Fig. 3 is a sectional view illustrating an example of binoculars.
Fig. 4 is a perspective view illustrating an example of binoculars.
Fig. 5 includes sectional views illustrating an example of binoculars.
Fig. 6 is a sectional view illustrating binoculars in a short-range mode.
Fig. 7 is a perspective view illustrating binoculars in a short-range mode.
Fig. 8 includes diagrams illustrating properties of binoculars based on a rotation center of an optical axis.
Fig. 9 is a diagram illustrating an example of binoculars according to a second embodiment.
Fig. 10 includes diagrams illustrating operations of a first rotation member.

### Description of Embodiments

### First Embodiment

The following describes embodiments of the present invention, referring to the accompanying drawings. It should be noted that the present invention is not limited to these embodiments. In the drawings, in order to illustrate the embodiments, representation in which dimensions are changed as appropriate is employed, such that a part is enlarged or emphasized. The following XYZ coordinate system that is shown in each figure is used as appropriate to explain directions in the drawings. Positive (+) directions of X, Y, and Z axes are indicated by the direction of an arrow (+X direction, for example) and negative (-) directions of the axes are indicated by the opposite direction of the arrow (-X direction).

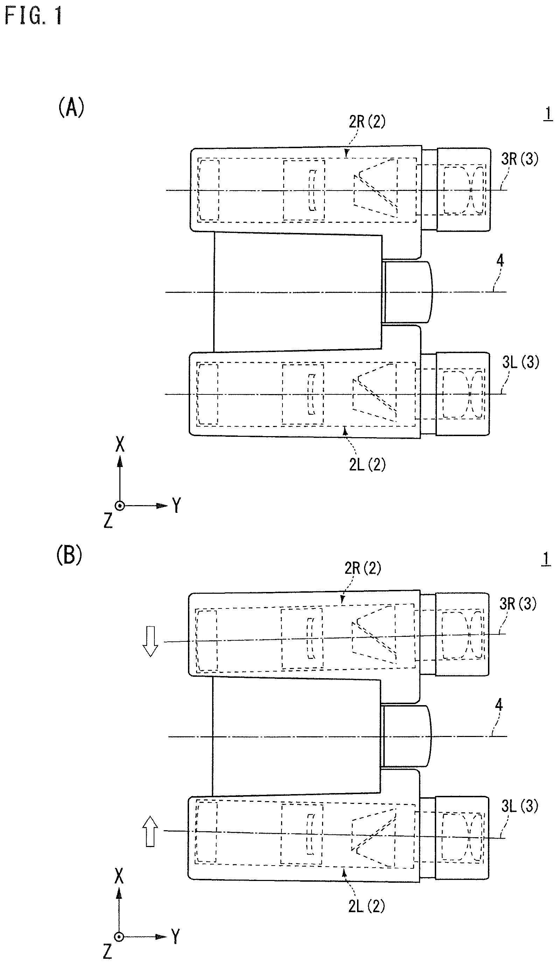

Fig. 1 illustrates an example of binoculars 1 according to a first embodiment. The binoculars 1 have a telescopic mode that can be used for observing an object in a long distance and a short-range mode that can be used for observing an object in a short distance, which is comparatively closer to the binoculars 1 than the object viewed in the telescopic mode is. When the binoculars 1 are used, the vertical direction thereof is Z direction, in which +Z direction is upward and -Z direction is downward. When the binoculars 1 are used, the right-left direction thereof is X direction, in which -X direction is leftward and +X direction is rightward. Fig. 1(A) is a top view of the binoculars 1 in the telescopic mode viewed from above (+Z direction) and Fig. 1(B) is a top view of the binoculars 1 in the short-range mode viewed from above (+Z direction).

As illustrated in Fig. 1(A), the binoculars 1 include an optical system 2L for a left eye and an optical system 2R for a right eye. Hereinafter, the optical system 2L for the left eye and the optical system 2R for the right eye are comprehensively referred to as a pair of right and left optical systems 2, as appropriate. The binoculars 1 change the direction of an optical axis 3L of the optical system 2L for the left eye and the direction of an optical axis 3R of the optical system 2R for the right eye in accordance with a focus position (focusing distance) of the pair of right and left optical systems 2. Hereinafter, the optical axis 3L and the optical axis 3R are collectively referred to as an optical axis 3 as appropriate when they do not need to be distinguished from each other. The optical axis 3L for the optical system 2L for the left eye and the optical axis 3R for the optical system 2R for the right eye are symmetrically disposed about a center axis 4. In the telescopic mode, the optical axes 3 of the pair of right and left optical systems 2 are set in parallel with the Y direction.

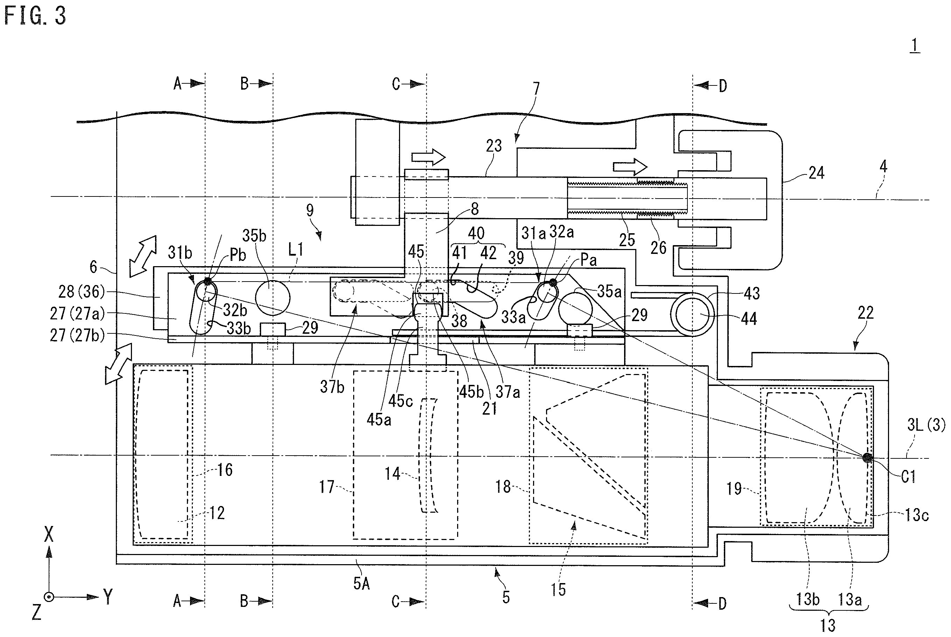

As illustrated in Fig. 1(B), in the short-range mode, the direction of the optical axes 3 of the pair of right and left optical systems 2 is set in such a manner that the optical axes 3 come closer to the center axis 4 along the direction away from the viewpoints (-Y direction). In the short-range mode, the direction of the optical axes 3 of the pair of right and left optical systems 2 is set in such a manner that an angle (convergence angle) between a visual line (optic axis) of a right eye and a visual line (optic axis) of a left eye is smaller than in the telescopic mode. In the short-range mode, the direction of the optical axes 3 of the pair of right and left optical systems 2 is set in such a manner that objective lenses 12 of the optical system 2L for the left eye and the optical system 2R for the right eye come closer to each other than in the telescopic mode. An adjuster to change (adjust) each of the directions of the optical axes 3 of the pair of right and left optical systems 2 is explained later with reference to Fig. 3, etc.

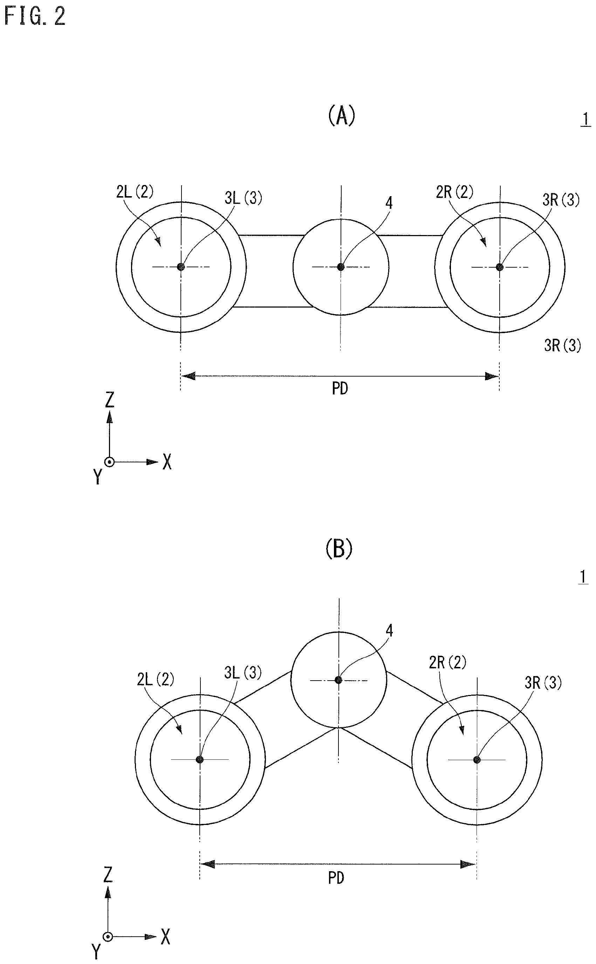

Fig. 2 illustrates the binoculars 1 viewed from the +Y direction. In the binoculars 1, the distance between the optical axis 3L of the optical system 2L for the left eye and the optical axis 3R of the optical system 2R for the right eye (hereinafter referred to as pupil distance PD) is adjustable. In the binoculars 1, relative positions between the optical system 2L for the left eye and the optical system 2R for the right eye are changeable, so that the pupil distance PD is adjustable. The optical system 2L for the left eye and the optical system 2R for the right eye are each rotatable about the center axis 4. As illustrated in Fig. 2(A), when the optical axis 3L of the optical system 2L for the left eye, the center axis 4, and the optical axis 3R of the optical system 2R for the right eye are aligned in a straight line, the pupil distance PD is largest. As illustrated in Fig. 2(B), when the optical system 2L for the left eye and the optical system 2R for the right eye are rotated in such directions that the optical systems 2R and 2L come closer to each other, a line connecting the optical axis 3L, the center axis 4, and the optical axis 3R is bent, which means the pupil distance PD becomes narrower than in a state illustrated in Fig. 2(A).

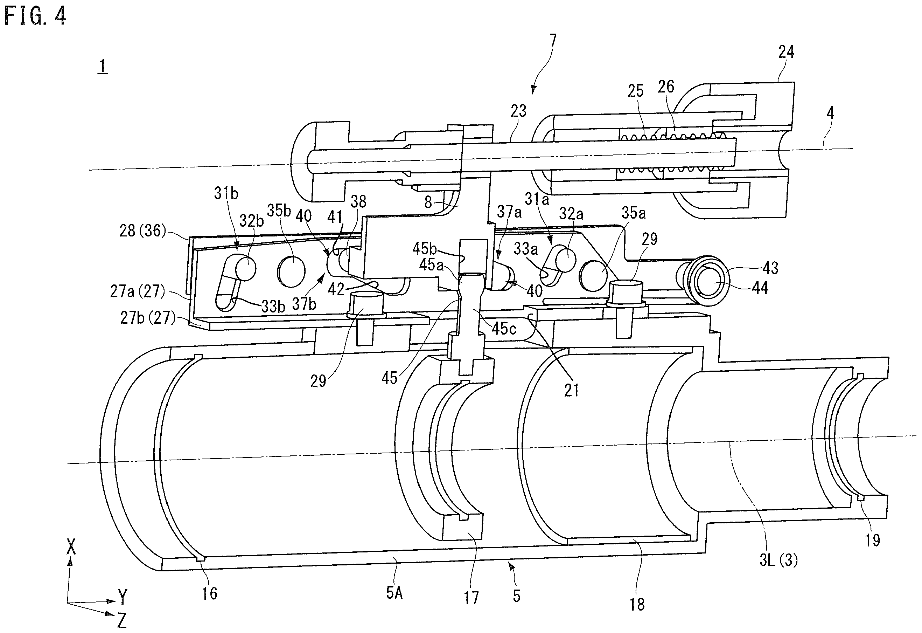

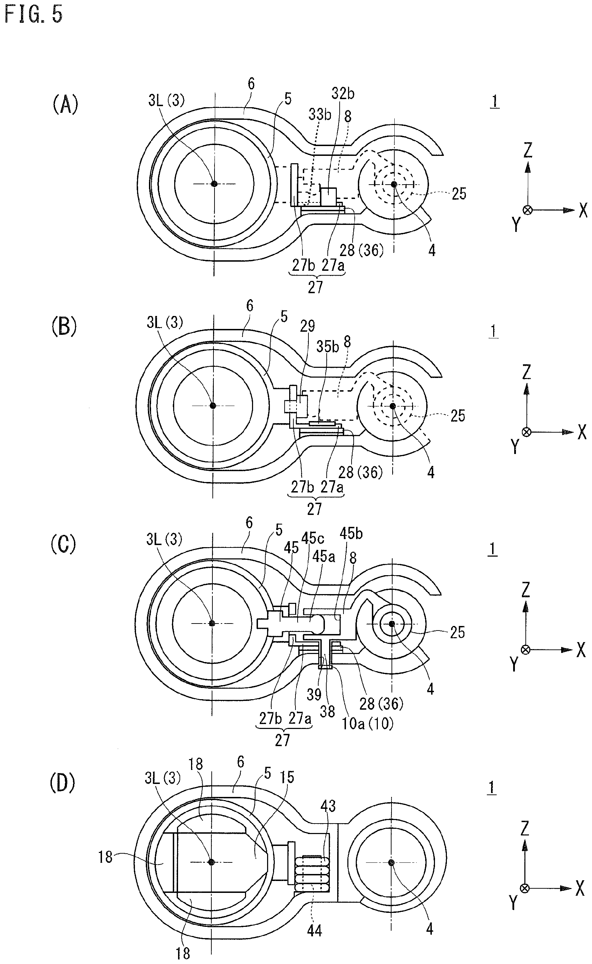

Fig. 3 is a sectional view illustrating the binoculars 1 in the telescopic mode, viewed from above (+Z direction). Fig. 4 is a sectional perspective view of the binoculars 1. Fig. 5 includes sectional views of the binoculars 1. Fig. 5(A) is a cross-sectional view taken along line A-A of Fig. 3. Fig. 5(B) is a cross-sectional view taken along line B-B of Fig. 3. Fig. 5(C) is a cross-sectional view taken along line C-C of Fig. 3. Fig. 5(D) is a cross-sectional view taken along line D-D of Fig. 3. While Fig. 3, etc., shows the left side alone of the binoculars 1, the right side of the binoculars 1 has the same structure as that of the left side. Thus, the left side portion of the binoculars 1 is explained and the explanation of the right side portion is omitted or simplified, as appropriate. In Fig. 4, to make it easier to view each portion of a lens barrel 5, the view of the optical system 2L is omitted.

As illustrated in Fig. 3, the binoculars 1 include an optical system 2L, the lens barrel 5 that supports the optical system 2L, a body 6 that supports the lens barrel 5, a focus adjuster 7 that adjusts a focus position of the optical system 2L, a movable body 8, and a pair of optical axis modifiers 9 that change the direction of the optical axis 3L of the optical system 2L.

The optical system 2L for the left eye includes an objective lens 12, eyepiece lenses 13, and a focus lens 14. Light from an object to be observed is incident on the objective lens 12, and the objective lens 12 guides the light to the focus lens 14. The focus lens 14 adjusts a focus position and a focusing distance of the optical system 2L. The focus lens 14 is disposed in an optical path from the objective lens 12 to the eyepiece lenses 13. The focus lens 14 moves in the optical axis 3L direction to adjust a focus of the optical system 2L. An upright prism 15 converts an inverted image formed with the objective lens 12 into an upright image. The upright prism 15 is disposed in the optical path from the objective lens 12 to the eyepiece lenses 13. A user can observe the upright image converted with the upright prism through the eyepiece lenses 13. The eyepiece lenses 13 include a lens member 13a and a lens member 13b. The lens member 13a is a lens member that is closest to a viewpoint out of the eyepiece lenses 13.

The binoculars 1 do not necessarily include the upright prism 15, and may convert an inverted image into an upright image with a relay optical system, for example. At least one of the objective lens 12, the eyepiece lenses 13, and the focus lens 14 may include a plurality of optical components (lens members, reflecting members, for example). The optical system 2L may include a zooming optical system that changes magnification of an image and the focus lens 14 may be used for changing magnification of an image.

The lens barrel 5 holds the optical system 2L. The lens barrel 5 holds therein the objective lens 12, the focus lens 14, the upright prism 15, and the eyepiece lenses 13.

The lens barrel 5 includes a lens barrel body 5A, an objective lens holder 16, a focus lens holder 17, an upright prism holder 18, and an eyepiece lens holder 19 (see Fig. 4). The lens barrel 5A is a cylindrical member. The objective lens holder 16 holds the lens barrel 12 and fixes the lens barrel 12 with respect to the lens barrel body 5A. The objective lens holder 16 may hold the objective lens 12 in a movable manner. The focus lens holder 17 holds the focus lens 14 and is movable along the inner wall of the lens barrel 5A. The focus lens holder 17 is guided by, for example, a guide member (not illustrated) to move within a predetermined range in the direction in parallel with the optical axis 3L. The upright prism holder 18 holds the upright prism 15 and fixes the upright prism 15 with respect to the lens barrel body 5A. The eyepiece lens holder 19 holds the eyepiece lens 13 and fixes the eyepiece lens 13 with respect to the lens barrel body 5A. The eyepiece lens holder 19 may hold the eyepiece lens 13 in a movable manner.

The body 6 holds the lens barrel 5 with a mounting member 27 interposed therebetween. The body 6 may accommodate therein the lens barrel 5, for example. The body 6 supports the lens barrel 5 in a movable manner. Between the body 6 and the lens barrel 5 is provided a space that enables the lens barrel 5 to move inside the body 6 (movable space). The body 6 is provided with an eyepiece 22 in one end thereof in the direction that comes closer to the viewpoint (-Y direction). When the pupil distance PD (see Fig. 2) is changed, a portion of the body 6 to support the lens barrel 5 is rotatable about the center axis 4 serving as the center of rotation. A portion to support the lens barrel 5 may be incapable of rotating about the center axis 4 serving as the center of rotation. For example, an adjuster to change the pupil distance PD may cause the optical system 2L for the left eye and the optical system 2R for the right eye to be slid so as to come close to each other. The binoculars 1 may include no means for changing the pupil distance PD.

The focus adjuster 7 is disposed between a pair of lens barrels 5, in which the focus lens 14 is moved in the direction in parallel with the optical axis 3L of the optical system 2L. The focus position of the optical system 2L is adjusted to a position in accordance with the position of the focus lens 14. The focus adjuster 7 includes a focusing axis 23, a focus knob 24, the movable body 8, and a universal joint 45. The focusing axis 23 is coaxial with the center axis 4. The focusing axis 23 is movable in the direction in parallel with the center axis 4 (Y direction). The focus lens 14 moves, in accordance with the movement of the focusing axis 23, in the direction in parallel with the optical axis 3L of the optical system 2L. The focusing axis 23 is a shaft including threads 25 in one end thereof in the -X direction.

The focus knob 24 is operated by a user to adjust the focus position of the optical system 2L. The focus knob 24 is connected to the focusing axis 23. The focus knob 24 is coaxial with the focusing axis 23 (coaxial with the center axis 4). The focus knob 24 is coaxially rotatable with the focusing axis 23. The focus knob 24 including thereon threads 26 that are engaged with the threads 25 on the focusing axis 23. The threads 25 rotate in accordance with the rotation of the focus knob 24, and thus the focusing axis 23 moves in the direction in parallel with the center axis 4 (Y direction).

The movable body 8 has an L shape viewed from above (+Z direction) and includes a portion extending in the X direction and a portion extending in the Y direction. As illustrated in Fig. 5(C), one end in the -X direction of the portion extending in the X direction of the movable body 8 is connected with the focusing axis 23, and the other end in the +X direction is connected with the universal joint 45. The movable body 8 includes, for example, a bearing that supports the focusing axis 23 in a rotatable manner. The relative positions between the movable body 8 and the focusing axis 23 are fixed in the Y direction. The movable body 8 moves, in accordance with the movement of the focusing axis 23, in the direction in parallel with the center axis 4 (Y direction). The movable body 8 moves for a displacement in accordance with a rotation angle of the focus knob 24.

The universal joint 45 connects the movable body 8 and the focus lens holder 17. The universal joint 45 includes a bulb-like member 45a, a receptacle 45b to be engaged with the bulb-like member 45a, and a shaft 45c extending in a form of a bar from the bulb-like member 45a. The receptacle 45b is provided to one end in the -X direction of a portion extending in the X direction of the movable body 8. The shaft 45c extends, passing through the inside of an opening 21 provided to the lens barrel 5, to reach the inside of the lens barrel 5. The shaft 45c has a portion on the side opposite to the bulb-like member 45a fixed to the focus lens holder 17. The focus lens holder 17 is thus connected with the focusing axis 23 through the universal joint 45 and the movable body 8. The focus lens holder 17 receives, in accordance with the movement of the focusing axis 23 in the Y direction, force in the Y direction from the universal joint 45 to move in the Y direction.

Referring back to Fig. 3, the optical axis modifiers 9 are disposed between the pair of lens barrels 5, and cause the lens barrels 5 to rotate in a direction in which a distance between the pair of lens barrels 5 is changed for at least one end thereof. Each of the optical axis modifiers 9 is disposed between the focus adjuster 7 and the lens barrel 5, causes the lens barrel 5 to move in conjunction with the movement of the focus lens 14, and changes the direction of the optical axis 3L of the optical system 2L in accordance with the focus position of the optical system 2L. The optical axis modifier 9 causes, in accordance with the movement of the above-described movable body 8, the lens barrel 5 to move to change the direction of the optical axis 3L. That is, as the movable body 8 moves, the focus adjuster 7 adjusts the focus position of the optical system 2L, while the optical axis modifier 9 changes the direction of the optical axis 3L. The optical axis modifier 9 causes the lens barrel 5 to rotate (rotationally move or swivel) about a rotation center C1 at a position from inside the lens member 13a that is closest to the viewpoint (eye) out of the eyepiece lenses 13 to an exit pupil position of the eyepiece lenses 13 (including a position on an end surface 13c of the lens member 13a, on the exit pupil plane). The rotation center C1 is set on the end surface 13c that is closest to a viewpoint in the lens member 13a. The optical axis modifiers 9, which are disposed between the focus adjuster 7 and the pair of lens barrels 5, enable the optical axis of the optical system for the left eye and the optical axis of the optical system for the right eye of the binoculars 1 to be adjusted precisely, and can reduce the height dimension (+Z direction, -Z direction) of the binoculars. Thus, the optical axis modifiers 9 substantially maintain a distance between the pair of lens barrels 5 for one end thereof that is closer to the viewpoints and cause the lens barrels 5 to rotate in the direction in which a distance on the other end that is opposite to the viewpoints is changed.

Each of the optical axis modifiers 9 includes the mounting member 27. The mounting member 27 (see Figs. 5(A) to 5(C)) connects the lens barrel 5 and the body 6. The mounting member 27 has an L shaped section in parallel with the XZ plane. The mounting member 27 has a bottom 27a having a bottom surface in parallel with the XY plane and a side 27b having a lateral surface in parallel with the YZ plane. The body 6 is provided with a surface plate member 28 on which the mounting member 27 is disposed with the bottom surface of the bottom 27a brought into contact with the top surface of the surface plate member 28. The surface plate member 28 may be integrally formed with the body 6 or may be fixed to the body 6 by bonding or screwing. It can be said that the body 6 supports the mounting member 27 with the surface plate member 28 interposed therebetween. The bottom surface 27a of the mounting member 27 and the top surface of the surface plate member 28 form together a pair of sliding surfaces. The bottom surface of the bottom 27a and the top surface of the surface plate member 28 are each formed so as to have a certain flatness (roughness equal to or smaller than a certain value). The mounting member 27 is movable in right and left directions relative to the surface plate member 28 by sliding thereon with the bottom 27a of the mounting member 27 brought into contact with the top surface of the surface plate member 28. The mounting member 27 may be movable relative to the surface plate member 28 by being connected with the surface plate member 28 with a bearing interposed therebetween. The mounting member 27 (Fig. 5(B)) has the side 27b connected to the lens barrel 5. The side 27b is fixed to the lens barrel 5 with a fastening member 29. The lens barrel 5 integrally moves with the mounting member 27 by being fixed together with the mounting member 27. It is preferable that the pair of sliding surfaces move by sliding along a surface including the focus adjuster 7 and the optical axis 3L of the optical system 2L. This configuration enables the optical axis of the optical system for the left eye and the optical axis of the optical system for the right eye of the binoculars 1 to be adjusted precisely.

A moving path of the mounting member 27 is determined with a plurality of first guides (first guide 31a, first guide 31b) illustrated in Fig. 3. The first guide 31a and the first guide 31b each have an arc shape (part of a circle) having a rotation center C1 serving as a center. The first guide 31a is disposed closer to the viewpoint (+Y direction) than the first guide 31b is.

The first guide 31a is disposed in the +X direction with respect to the universal joint 45 and the first guide 31b is disposed in the -X direction with respect to the universal joint 45. Because the moving path of the mounting member 27 is determined with the plurality of guides (first guide 31a, first guide 31b), the mounting member 27 enjoys a favorable moving precision while moving. It should be noted that any desired number of first guides (first guide 31a, first guide 31b) may be provided, for example, three or more may be selected.

The first guide 31a is disposed in one end of the mounting member 27 in the +Y direction. The first guide 31a includes a first pin 32a and a first groove 33a (slit) that is engaged with the first pin 32a. The first pin 32a is a columnar member that is provided to the surface plate member 28 and protrudes from the top surface of the surface plate member 28 in the +Z direction. The first groove 33a is a recess that is formed on the mounting member 27. While the first groove 33a is a hole through which the mounting member 27 passes, the first groove 33a may be a recess having a bottom therein. The first groove 33a enables the first pin 32a to pass therethrough. The outline of the first groove 33a is an arc in a form of a band (part of a ring) having a certain width. The first groove 33a has a curved band shape including two half circles, each of which has substantially the same diameter as that of the first pin 32a, on both ends thereof. The first groove 33a has a constant width between the ends thereof. A center line of the first groove 33a in the width direction is part of a circumference having the rotation center C1 serving as the center of the circumference. The center axis of the first pin 32a is disposed on the center line of the first groove 33a in the width direction of the first groove 33a. The mounting member 27 is movable such that the position of the first pin 32a inside the first groove 33a changes while the inner wall of the first groove 33a is brought into contact with the outer surface of the first pin 32a. The diameter of the first pin 32a and the width of the first groove 33a are set such that, for example, the inner wall of the first groove 33a is movable along the outer surface of the first pin 32a without rattling.

The first guide 31b is disposed on one end of the mounting member 27 in the -Y direction. The first guide 31b has the same constitution as that of the first guide 31a, and descriptions for the first guide 31b common to those for the first guide 31a are omitted or simplified, as appropriate. The first guide 31b includes a first pin 32b and a first groove 33b (slit) that is engaged with the first pin 32b. The first pin 32b has the same structure as that of the first pin 32a, and is a columnar member protruding from the surface plate member 28 (see Fig. 5(A)) in the +Z direction. The first pin 32b is provided to a different position from that for the first pin 32a in the surface plate member 28. The first groove 33b is, similar to the first guide 31a, movable with the inner wall thereof brought into contact with the first pin 32b. The outline of the first groove 33b is an arc in a form of a band (part of a ring) having a certain width. A center line of the first groove 33b in the width direction is part of a circumference having the rotation center C1 serving as the center of the circumference, and the diameter of the circumference is different from that to the first groove 33a.

The above-described first guides (first guide 31a, first guide 31b) define the moving path of the mounting member 27 as an arc centering on the rotation center C1. The mounting member 27 is guided by the first guide 31a and the first guide 31b, and rotates about the rotation center C1 on the center side of the body 6 in the right-left direction with respect to the optical axis 3L of the optical system 2L (for example, on the side of the center axis 4). In accordance with the rotation of the mounting member 27, the lens barrel 5 rotates about the rotation center C1 and the optical system 2L supported by the lens barrel 5 also rotates about the rotation center C1. The mounting member 27 does not necessarily rotate in the direction of the center axis 4, and may rotate in a direction, for example, such that the right and the left axes 3L and 3R are symmetrical to a plane that is vertical to a plane including the right and the left optical axes 3L and 3R (for example, a plane in parallel with the XY plane of Fig. 2) and that includes the center axis 4 (for example, a plane through which the center axis 4 passes, and in parallel with the YZ plane), in which the objective lenses 12 of the optical system 2L for the left eye and the optical system 2R for the right eye come close to each other. The mounting member 27 may rotate such that, for example, a distance between the optical axis 3L and the optical axis 3R becomes narrower as the distance from the viewpoints increases along the optical axes 3L, 3R.

The first pin 32a of the first guide 31a is brought into contact with the one end of the first groove 33a in the +X direction in the telescopic mode (a state in Fig. 3). Sign Pa in Fig. 3 indicates a contact position in which the first pin 32a and the first groove 33a contact with each other in the telescopic mode. In the telescopic mode, the first pin 32b of the first guide 31b is brought into contact with the one end of the first groove 33b in the +X direction. Sign Pb in Fig. 3 indicates a contact position in which the first pin 32b and the first groove 33b contact with each other in the telescopic mode. Line L1 connecting the contact positions Pa and Pb is in parallel with the optical axis 3L of the optical system 2L in the telescopic mode.

In the first embodiment, the optical axis modifier 9 includes an elastic body 43. The elastic body 43 applies force to the mounting member 27 in a direction in which the mounting member 27 is separated from the center axis 4 (-X direction). In other words, the elastic body 43 presses the mounting member 27 against the lens barrel 5. The elastic body 43 applies force exceeding the friction force at a contact surface between the mounting member 27 and the surface plate member 28 to the mounting member 27. This force causes the one end of the first groove 33a in the +X direction and the first pin 32a to be pressed to each other at a contact position Pa, and the one end of the first groove 33b in the +X direction and the first pin 32b to be pressed to each other at a contact position Pb. The elastic body 43 is disposed in a side that is closer to a viewpoint than the first guide 31a is. The elastic body 43 is a coil spring, for example, and is mounted to a pin 44 that is provided to the body 6, with one end of the coil spring being fixed to the body, the other end thereof being fixed to the mounting member 27.

In the first embodiment, a rotation angle of the optical axis 3L of the optical system 2L is set in accordance with the focus position of the optical system 2L. A plurality of second guides (second guide 37a, second guide 37) cause, in conjunction with the movement of the movable body 8, the mounting member 27 to move along a certain moving path. The mounting member 27, the moving path of which is defined with the second guides (second guide 37a, second guide 37b), moves in the X direction for an amount in accordance with the amount of the movement of the movable body 8 in the Y direction.

The second guide 37a and the second guide 37b are provided side by side in the bottom surface side of the movable body 8 in a direction in parallel with the center axis 4 (Y direction). The second guide 37a is provided in the +X direction of the universal joint 45. The second guide 37b is provided in the -Y direction with respect to the second guide 37a. The second guide 37a includes a second pin 38 and a second groove 40 that is engaged with the second pin 38. As illustrated in Fig. 5(C), the second pin 38 is a columnar member, which is provided to the movable body 8 and protruding from the bottom surface of the movable body 8 in the -Z direction. The second groove 40 is a through hole provided to the mounting member 27. The second pin 38 is inserted to the second groove 40. The second pin 38 is also inserted to a groove 39 piercing the body 6.

As illustrated in Fig. 3, the groove 39 provided to the body 6 is a slit, linearly extending in parallel with the optical axis 3L of the optical system 2L. When the focus position is adjusted, the second pin 38 moves in the Y direction along the groove 39. The second groove 40 includes a first portion 41 and a second portion 42. The first position 41 is a portion brought into contact with the second pin 38 in the telescopic mode. The first portion 41 is a slit, linearly extending in a form of a band in parallel with the optical axis 3L of the optical system 2L. The second pin 38 moves in parallel with the first portion 41 when the focus position is adjusted in the telescopic mode, and applies substantially no force to the inner wall of the first portion 41 (mounting member 27) in the X direction. Thus, the mounting member 27 substantially does not move in the X direction when the focus position is adjusted in the telescopic mode.

The second portion 42 is a portion that is brought into contact with the second pin 38 in the short-range mode. The second portion 42 is a slit, extending from the first portion 41 in a form of a band and bent in the right-left direction (-X direction) with respect to the optical axis 3L of the optical system 2L. The second portion 42 inclines with respect to the Y direction so as to be separated from the center axis 4 along the +Y direction. The second pin 38 applies, because the second portion 42 inclines with respect to the Y direction, force to the inner wall of the second portion 42 in the X direction when moving in the Y direction while being brought into contact with the second portion 42. With this force, the mounting member 27 rotates about the rotation center C1 along the moving path defined by the first guide 31a and the second guide 31b. The lens barrel 5 rotates about the rotation center C1 as the mounting member 27 rotates, and the optical system 2L held by the lens barrel 5 also rotates about the rotation center C1.

Thus, the direction of the optical axis 3L of the optical system 2L is specified by the rotation angle of the mounting member 27, and the rotation angle of the mounting member 27 is specified by the inclination of the second portion 42 in the Y direction and the position of the second pin 38 in the Y direction. Because the position of the second pin 38 in the Y direction is specified by the position of the focus lens 14 in the Y direction in accordance with the focus position of the optical system 2L, the direction of the optical axis 3L of the optical system 2L is adjustable in conjunction with the focus position of the optical system 2L. The direction of the optical axis 3L of the optical system 2L is set so as to reduce the convergence angle between the right and the left eyes of a user, and a level of reduction is set to any desired level.

In the first embodiment, the optical axis modifier 9 includes force appliers (force applier 35a, force applier 35b). The force appliers 35a and 35b apply force in such a direction that the mounting member 27 and the body 6 are attracted to each other. The force applier 35a and the force applier 35b each include a magnet (permanent magnet or electromagnet) for example, to apply the force by means of magnetic power. The force applier 35a is provided to the end in the +Y direction of the mounting member 27. The force applier 35b is provided to the end in the -Y direction of the mounting member 27. The force applier 35a has the same configuration as that of the force applier 35b. Hereinafter, the force applier 35b is explained as a representative and explanation about the force applier 35a is omitted or simplified, as appropriate.

The force applier 35b (see Fig. 5(B)) is disposed with the mounting member 27 interposed between the force applier 35b and the surface plate member 28. The force applier 35b is fixed to the top surface side of the mounting member 27. The surface plate member 28 includes a metal part 36 that receives magnetic force from the force applier 35b.

The metal part 36 is formed of ferromagnetic material such as iron (martensitic steels, ferritic steels, austenittic-ferritic steels (duplex-system steels)) for example. The metal part 36 is subjected to surface treatment thereon with a rust-preventive agent, rust-preventive coating, or the like, and is thereby prevented from oxidization. The metal part 36 that is prevented from oxidization is prevented from losing magnetic force due to the oxidation. Examples of the treatment with rust-preventive coating include treatment by applying coating into which teflon resin is impregnated, such as nickel-teflon plating or the like, to the surface of a base member of the metal part 36. The metal part 36 may be prevented from oxidation by being selected from ferromagnetic stainless steels including martenisitic steels, ferritic steels, austenitic-ferritic steels (duplex-system steels), or the like, as formation materials.

The mounting member 27 and the surface plate member 28 come into close contact with each other upon receiving force in directions in which the force applier 35b and the metal part 36 come close to each other due to magnetic force therebetween. This force prevents the mounting member 27 from floating from the surface plate member 28. Thus, the lens barrel 5 connected to the mounting member 27 is prevented from moving in the Z direction, and the optical axis 3L of the optical system 2L supported by the lens barrel 5 is prevented from vertically moving. It should be noted that the force applier 35b generates, when the mounting member 27 and the surface plate member 28 are separated from each other for a distance equal to or less than a threshold, magnetic force with which the mounting member 27 and the surface plate member 28 come into close contact again with each other. With this magnetic force, the mounting member 27 floating from the surface plate member 28 due to external force can be returned to a state that the mounting member 27 and the surface plate member 28 come into close contact with each other.

A contact surface between the mounting member 27 and the surface plate member 28 has friction reduced so that the mounting member 27 can easily slide on the surface plate member 28 and the mounting member 27 can easily move. For example, when the surface of the surface plate member 28 includes the metal part 36, at least part of the mounting member 27, the part contacting with the surface plate member 28 (metal part 36), is formed of resin. That is, the force applier 35b applies force to the surface plate member 28 (metal part 36) with the resin interposed therebetween. This resin may be, for example, polytetrafluoroethylene resin, polyacetal resin, or the like. The whole of or part (for example, surface or bottom) of the mounting member 27 may be formed of resin.

The friction coefficient between the mounting member 27 and the body 6 (for example, surface plate member 28) is 0.4 or less, for example. The friction coefficient between the mounting member 27 and the surface plate member 28 can be made 0.4 or less when, for example, one of the surface (surface layer) of the mounting member 27 and the surface (surface layer) of the surface plate member 28 is formed of poytetrafluoroethylene resin or polyacetal resin, and the other is formed of polytetrafluoroethylene resin, polyacetal resin, polycarbonate resin, aluminum, or the like.

It should be noted that the metal part 36 may be provided to the whole of or part of the surface plate member 28. For example, the metal part 36 may be disposed only in a region that overlaps with the force applier 35b when viewed from the Z direction. The mounting member 27 may be made of metal and the surface plate member 28 may be made of resin; in this case, the force applier 35b is disposed so as to sandwich the surface plate member 28 between the force applier 35b and the mounting member 27. The force applier 35b may be a portion that causes the mounting member 27 and the surface plate member 28 to come close to each other by force other than magnetic force (for example, elastic force). For example, the force applier 35b may apply force by some elastic body such as a spring.

It should be noted that friction between the mounting member 27 and the body 6 (for example, surface plate member 28) may be reduced on a contact surface other than that between the mounting member 27 and the surface plate member 28. For example, in the first guides, the friction coefficient between the inner wall of the first groove (first groove 33a, first groove 33b) and the first pin (first pin 32a, first pin 32b) may be 0.4 or less. To reduce friction between the inner wall of the first groove and the first pin, the above-described formation materials of the mounting member 27 may be combined with those of the surface plate member 28. In the second guides, the friction coefficient between the inner wall of the second groove 40 and the second pin 38 may be 0.4 or less. To reduce friction between the inner walls of the second groove and the second pin, the above-described formation materials of the mounting member 27 may be combined with those of the surface plate member 28.

In a case where the mounting member 27 and the body 6 (for example, surface plate member 28) come close to each other due to magnetic force, when a distance between the mounting member 27 and the surface plate member 28 increases due to some external force or the like, force that causes the mounting member 27 and the surface plate member 28 to be attracted to each other decreases. Thus, when the distance between the mounting member 27 and the surface plate member 28 is equal to or greater than the threshold value, a state where the mounting member 27 and the surface plate member 28 are separated from each other is not returned to a state where the members come into contact with each other. In the first embodiment, the binoculars 1 include a plurality of regulators 10 that regulate the upper limit of the distance between the mounting member 27 and the body 6.

Each of the regulators 10 includes a locking member 10a provided to a lower end of the second pin 38 (Fig. 5(C)). The locking member 10a is provided to the outside of the body 6 with respect to the groove 39 provided to the body 6. The locking member 10a has an outer dimension greater than the width of the groove 39, which prevents the second pin 38 (movable body 8) from floating in the +Z direction. Thus, the upper limit of the position of the mounting member 27 in the Z direction is defined by the bottom surface of the movable body 8, thereby defining the upper limit between the mounting member 27 and the body 6 (surface plate member 28). The locking member 44 regulates the movable body 8 moving upward. It should be noted that the regulator 10 is not limited to the above-described configuration, and may include an elastic body that biases the mounting member 27 from the top to the bottom thereof. The regulator 10 may be a portion in which a locking member larger than the width of the first groove 33a is provided to the first pin 32 and thereby regulates the mounting member 27 moving upward to define the upper limit of the distance between the mounting member 27 and the body 6.

The following explains operations of the binoculars 1. First, with reference to Fig. 3, the operations of the binoculars 1 in the telescopic mode are explained. When adjusting the focus position in the telescopic mode, a user rotates the focus knob 24. Rotation of the focus knob 24 causes the focusing axis 23 to move in a direction in parallel with the center axis 4, and thus the movable body 8 moves in the direction in parallel with the center axis 4. As the movable body 8 moves, the focus lens holder 17 and the focus lens 14 move in the direction in parallel with the center axis 4, and the focus position of the optical system 2L is adjusted to a focus position in accordance with the position of the focus lens 14. When the focus lens 14 moves, the second pin 38 of the second guide 37a moves in a direction in parallel with the Y direction while being in contact with the first portion 41 of the second groove 40, without acting on the mounting member 27. Consequently, in the first guide 31a, a state is maintained in which the first pin 32a and the inner wall of the first groove 33a are in contact with each other at the contact position Pa and the first pin 32b and the inner wall of the first groove 33b are in contact with each other at the contact position Pb. Thus, the optical axis 3L of the optical system 2L is kept in parallel with the center axis 4.

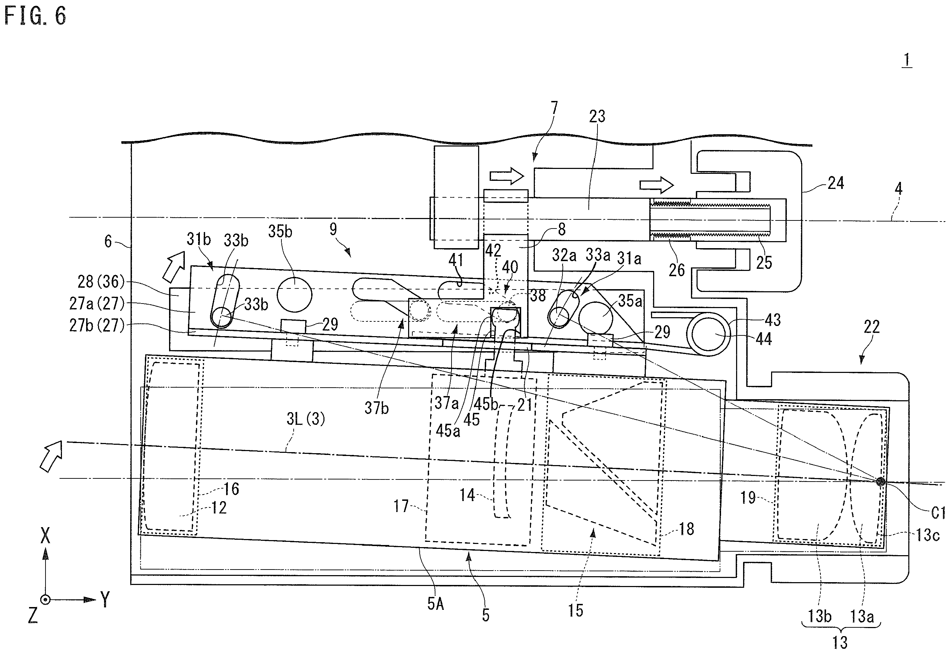

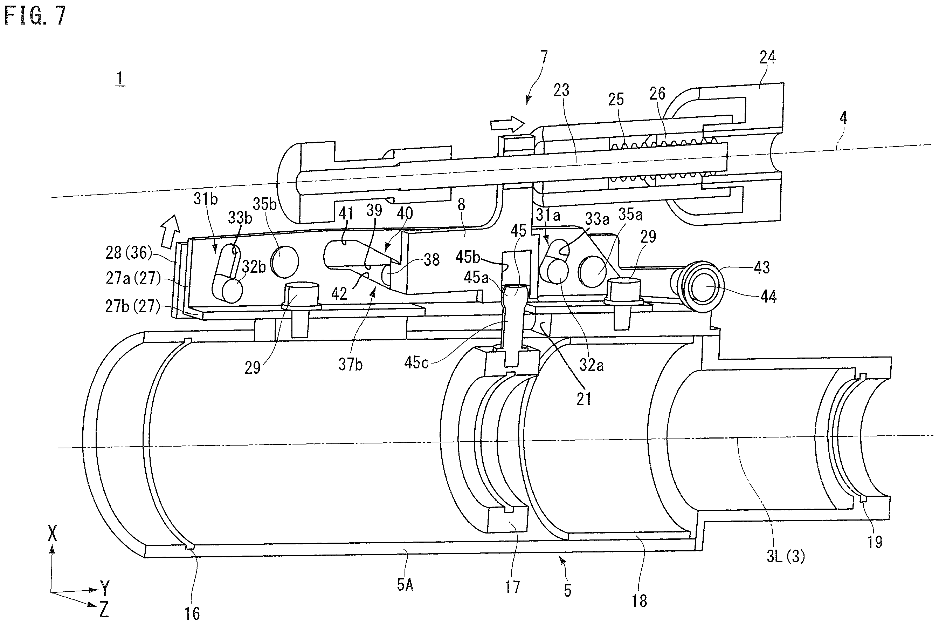

The following explains operations of the binoculars 1 in the short-range mode. Fig. 6 is a sectional view illustrating the binoculars 1 viewed from above in the short-range mode. Fig. 7 is a sectional perspective view illustrating the binoculars 1 in the short-range mode.

Operations to adjust the focus position in the short-range mode are the same as those in the telescopic mode. An operation to change the direction of the optical axis 3L of the optical system 2L will now be explained. In the short-range mode, when the movable body 8 moves in a direction toward a viewpoint (+Y direction), the second pin 38 of the second guide 37a moves along the groove 39 provided to the body 6 in the +Y direction while being in contact with the second portion 42 of the second groove 40. The second pin 38, when moving in the +Y direction, applies force to the inner wall of the second portion 42 in the +X direction, while the mounting member 27 moves along a moving path that is specified by the first guide 31a and the second guide 31b and rotates about the rotation center C1. Accordingly, the lens barrel 5 connected to the mounting member 27 rotates about the rotation center C1, and the optical system 2L supported by the lens barrel 5 also rotates about the rotation center C1. Thus, the direction of the optical axis 3L of the optical system 2L is changed to a direction in such a manner that the optical axis 3L is closer to the center axis 4 as the distance from the viewpoints increases. When the movable body 8 and the focus lens holder 17 are connected by the universal joint 45, in the short-range mode, even with the moving direction of the movable body 8 (direction in parallel with the center axis 4) not being in parallel with the moving direction of the focus lens holder 17 (direction of optical axis 3L of optical system 2L), the movable body 8 and the focus lens holder 17 smoothly move.

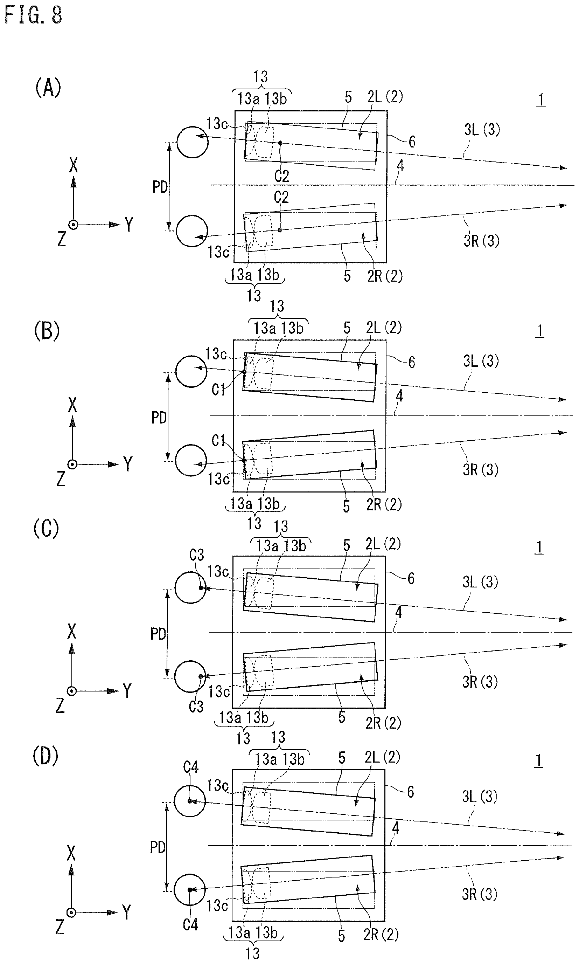

The rotation centers of the lens barrels 5 are explained. Fig. 8 illustrates the optical axes compared to each other with the rotation centers changed. In Fig. 8(A), rotation centers C2 are on the side opposite to the viewpoints with respect to the lens members 13a that are closest to the viewpoints out of the eyepiece lenses 13. The rotation centers C2 are positioned farther away from the viewpoints (on the side opposite to the viewpoints with respect to the eyepiece lenses 13) than the lens members 13b that are farthest from the viewpoints out of the eyepiece lenses 13 are. In Fig. 8(B), the rotation centers C1 are positioned on the lens members 13a that are closest to the viewpoints out of the eyepiece lenses 13. In Fig. 8(C), rotation centers C3 of the lens barrels 5 are positioned on the exit pupils of the eyepiece lenses 13. In Fig. 8(D), rotation centers C4 are positioned in the eyeball centers of an observer in a state where the exit pupil positions of the eyepiece lenses 13 (rotation centers C3 in Fig. 8(C)) are made coincident with the pupil positions of the observer.

As illustrated in Fig. 8(A), in a state where the rotation centers C2 are positioned on the side opposite to the viewpoints with respect to the eyepiece lenses 13, when modes are changed from the telescopic mode to the short-range mode, the directions of the optical axes 3 of the optical systems 2 change to directions in which the pupil positions of the observer are separated away from each other (away rightward and leftward from each other about the center axis 4). The pupil distance PD is widened when modes are changed from the telescopic mode to the short-range mode, and narrowed when changed from the short-range mode to the telescopic mode, and thus the pupil distance PD needs to be readjusted every time the modes are changed based on a mechanism illustrated in Fig. 2. The eyepiece 22 (see Fig. 4) is relatively large in size in this case than that in the other cases of the rotation centers in Fig. 8. By contrast, a mechanism to rotate the lens barrels 5 is relatively small in size compared with that for the rotation centers in Fig. 8.

As in illustrated in Fig. 8(B), in a case where the rotation center C1 is positioned inside the lens member 13a (for example, on the end surface 13c) that is closest to the viewpoint out of the eyepiece lenses 13, when modes are changed from the telescopic mode to the short-range mode, the directions of the optical axes 3L of the optical systems 2L shift to directions in which the pupil positions of the observer are separated away from each other. The amount of this shift is small compared with that of Fig. 8(A). When modes are changed from the telescopic mode to the short-range mode (or vice versa), the pupil distance PD is unchanged or is slightly changed, and thus the pupil distance PD does not need to be readjusted. This provides excellent operability during observation. In the configuration of Fig. 8(B), the eyepiece 22 (see Fig. 4) may be equivalent in size to that for binoculars operated in the telescopic mode alone. By contrast, a mechanism to rotate the lens barrels 5 is relatively middle in size compared with that for the rotation centers in Fig. 8(A). To be more specific, when the rotation centers C1 are each positioned in the center of the surface of the lens member 13a, which is closest to the viewpoints out of the eyepiece lenses 13, on the viewpoint side (end surface 13c), the amount of changing the pupil distance PD is zero when modes are changed from the telescopic mode to the short-range mode (or vice versa).

As illustrated in Fig. 8(C), in a case where the rotation centers C3 are each positioned in the pupils of the eyepiece lenses 13, when modes are changed from the telescopic mode to the short-range mode, the directions of the optical axes 3L of the optical systems 2L are coincident with directions of visual lines of an observer who is observing an object with their naked eyes. This configuration does not burden the eyes of the observer, and provides the most favorable condition for their eyes. Although the pupil distance PD is slightly narrower than that for the other rotation positions in Fig. 8, but this does not require a change in the pupil distance PD accordingly. Because the pupil distance PD is slightly narrower, the eyepiece 22 (see Fig. 4) may be slightly larger in size than that for the other rotation centers in Fig. 8(B). The mechanism to rotate the lens barrels 5 is slightly larger in size than that in Fig. 8(B).

As illustrated in Fig. 8(D), in a case where the rotation centers C4 are each the center of an eyeball, when modes are changed from the telescopic mode to the short-range mode, the directions of the optical axes 3L of the optical systems 2L shift to directions in which the eye positions of the observer are converged (congested). The pupil distance PD is narrower than that in Fig. 8(C). The pupil distance PD is narrowed when modes are changed from the telescopic mode to the short-range mode, and widened when changed from the short-range mode to the telescopic mode, and thus the pupil distance PD needs to be readjusted every time the modes are changed based on the mechanism illustrated in Fig. 2.

The eyepiece 22 (see Fig. 4) is relatively large in size in this case than that for the other cases of the rotation centers in Fig. 8. The mechanism to rotate the lens barrels 5 is relatively large in size compared with that for the rotation centers in Fig. 8.

As described above, considering the pupil distance PD and the eye positions of the observer in a case where modes are changed from the telescopic mode to the short-range mode, it is preferable that the positions of the rotation centers (for example, rotation center C1, rotation center C3) each be set between the inside of the lens member 13a, which is closest to the viewpoint out of the eyepiece lenses 13, and the exit pupil position of the eyepiece ocular lenses 13. Setting each of the rotation centers (for example, rotation center C1, rotation center C3) between the inside of the lens member 13a, which is closest to the viewpoint out of the eyepiece lenses 13, and the exit pupil position of the eyepiece lenses 13 can prevent the eyepiece 22 from being enlarged. In the configurations with the rotation centers C2, C3, and C4 shown in Figs. 8(A), 8(C), and 8(D), the optical axis modifiers 9 cause the pair of lens barrels 5 to rotate in the directions that changes both a distance between first ends and a distance between second ends, the first ends and the second ends being among the ends of the pair of the lens barrels 5, the first ends being closer to the viewpoints, and the second ends being opposite to the viewpoints.

In the first embodiment, the binoculars 1 include the optical systems 2 including the objective lenses 12, the eyepiece lenses 13, and the focus lenses 14 disposed in the optical path from the objective lens 12 to the eyepiece lens 13, a pair of lens barrels 5 holding the respective optical systems 2, the body 6 supporting the lens barrels, the focus adjuster 7 in which the focus lens 14 is moved in the optical axis direction of the optical systems 2 and the focus position of the optical systems 2 is adjusted, and a pair of optical axis modifiers 9 that cause the lens barrels 5 to move in conjunction with the movement of the focus lenses 14 to change the directions of the optical axes of the optical systems 2 in accordance with the focusing position of the optical systems. The optical axis modifiers 9 each connect the lens barrel 5 and the body 6, and include the mounting member 27 that is rotatable toward the body 6 in the right and left directions with respect to the optical axis 3 of the optical system 2, and the force applier that applies force in a direction in which the mounting member 27 and the body 6 come close to each other. With this configuration, the force applier enables the position of the mounting member 27 to be regulated, and enables the optical axis to be adjusted precisely in the horizontal and the vertical directions with respect to the user's viewpoints. In the binoculars 1, at least one of the regulator 10, the movable body 8, the first guides (first guide 31a, first guide 31b), the second guides (second guide 37a, second guide 37b), and the elastic body 43 may be omitted, and may be different from that in the above-described first embodiment.

In the first embodiment, the binoculars 1 include the optical systems 2 including the objective lenses 12, the eyepiece lenses 13, and the focus lenses 14 disposed in the optical path from the objective lens 12 to the eyepiece lens 13, the pair of lens barrels 5 holding the respective optical systems 2, the body 6 supporting the lens barrels, the focus adjuster 7 in which the focus lens 14 is moved in the optical axis direction of the optical systems 2 to adjust the focus position of the optical systems 2, and the pair of optical axis modifiers 9 that cause the lens barrels 5 to move in conjunction with the movement of the focus lenses 14 to change the direction of the optical axes of the optical systems 2 in accordance with the focusing position of the optical systems 2. The optical axis modifiers 9 cause the lens barrels 5 to rotate toward the body 6 in the right and left directions with respect to the optical axes 3 of the optical systems 2 about the rotation centers C1 inside the eyepiece lenses 13. As illustrated in Fig. 8, this configuration enables the optical axis to be adjusted precisely in the horizontal and the vertical directions with respect to the user's viewpoints. In the binoculars 1, at least one of the mounting member 27, the regulator 10, the movable body 8, the first guides (first guide 31a, first guide 31b), the second guides (second guide 37a, second guide 37b), the elastic body 43, and the force applier 35 may be omitted, and may be different from that in the above-described first embodiment.

In the first embodiment, the binoculars 1 include the optical systems 2 including the objective lenses 12, the eyepiece lenses 13, and the focus lenses 14 disposed in the optical path from the objective lens 12 to the eyepiece lens 13, the pair of lens barrels 5 holding the respective optical systems 2, the body 6 supporting the lens barrels, the focus adjuster 7 in which the focus lens 14 is moved in the optical axis direction of the optical systems 2 to adjust the focus position of the optical systems 2, the pair of optical axis modifiers 9 that cause the lens barrels 5 to move in conjunction with the movement of the focus lenses 14 to change the direction of the optical axes of the optical systems 2 in accordance with the focusing position of the optical systems 2, and the movable bodies 8 that move together with the focus lens 14 in the direction of the optical axes of the optical systems 2, the moving path of which is specified by the second guides (second guide 37a, second guide 37b). The optical axis modifiers 9 each include the mounting member 27 that connects the lens barrel 5 and the body 6, and the second guides (second guide 37a, second guide 37b) include the second pin 38 provided to the movable body 8 and the second groove 40 that is provided to the mounting member 27 and is engaged with the second pin 38. This configuration enables the moving path of the movable body 8 to be specified by the second guides, which enables the optical axis to be adjusted precisely in the horizontal and the vertical directions with respect to the user's viewpoints. In the binoculars 1, at least one of the regulator 10, the first guides (first guide 31a, first guide 31b), the elastic body 43, and the force applier 35 may be omitted, and may be different from that in the above-described first embodiment.

### Second Embodiment

The following explains a second embodiment. In the second embodiment, the same configurations as those in the first embodiment are denoted with the same symbols and their explanations are omitted or simplified.

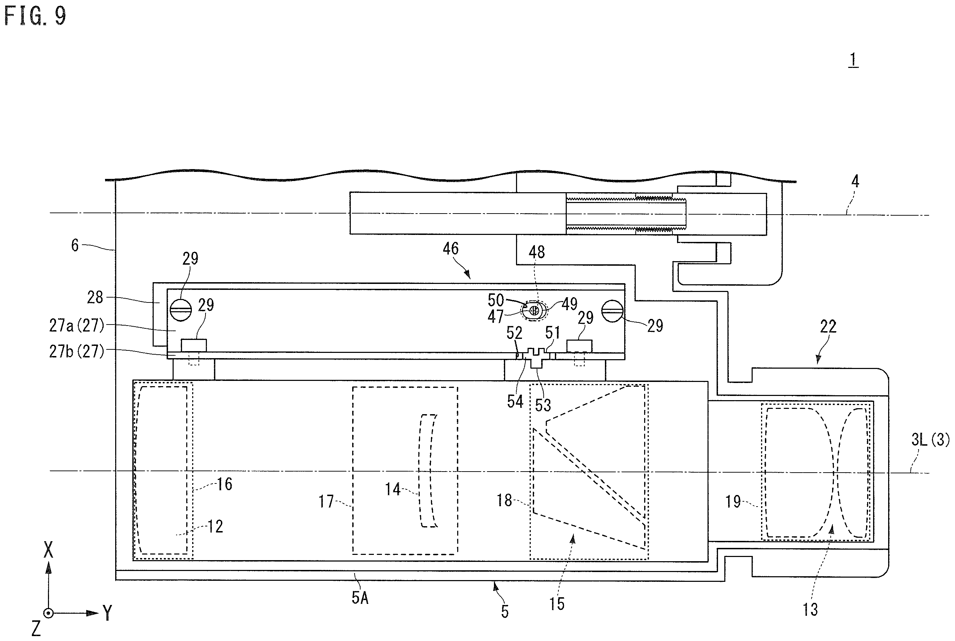

Fig. 9 is a sectional view viewed from above, illustrating binoculars 1 according to the second embodiment. In the binoculars 1 in the second embodiment, in each of the right-left and the vertical directions with respect to the optical axis 3L of the optical system 2L, relative positions between the lens barrel 5 and the body 6 are adjustable by a position adjuster 46. The position adjuster 46 employs, for example, an eccentric cam, to adjust the position of the lens barrel 5, thereby adjusting the direction of the optical axis 2L of the optical system 3L held by the lens barrel 5. The position adjuster 46 can be used for, for example, fine adjustment of the position of the optical axis 3L of the optical system 2L during manufacturing of the binoculars 1. In the second embodiment, while the pair of right and left optical systems 2 (optical system 2L for a left eye, optical system 2R for a right eye), the lens barrels 5, the focus adjuster 7, the movable body 8, the regulators 10, and optical axis modifiers 9 are the same as those in the first embodiment, they may be different from those in the first embodiment.

The body 6 in the second embodiment supports the lens barrel 5 with the position adjuster 46 interposed therebetween. The position adjuster 46 includes the mounting member 27, a first rotation member 47, and a second rotation member 51. The mounting member 27 connects the lens barrel 5 and the body 6. The mounting member 27 is movable in the right and left directions relative to the body 6 while being brought into contact with the body 6. The first rotation member 47 is provided to a junction between the mounting member 27 and the body 6 and is used for adjusting the position of the mounting member 27 in the right and left direction with respect to the body 6. The mounting member 27 is vertically movable relative to the lens barrel 5 while being brought into contact with the lens barrel 5. The first rotation member 47 is provided to a junction between the mounting member 27 and the lens barrel 5 and can be used for adjusting the vertical direction of the lens barrel 5 with respect to the mounting member 27.

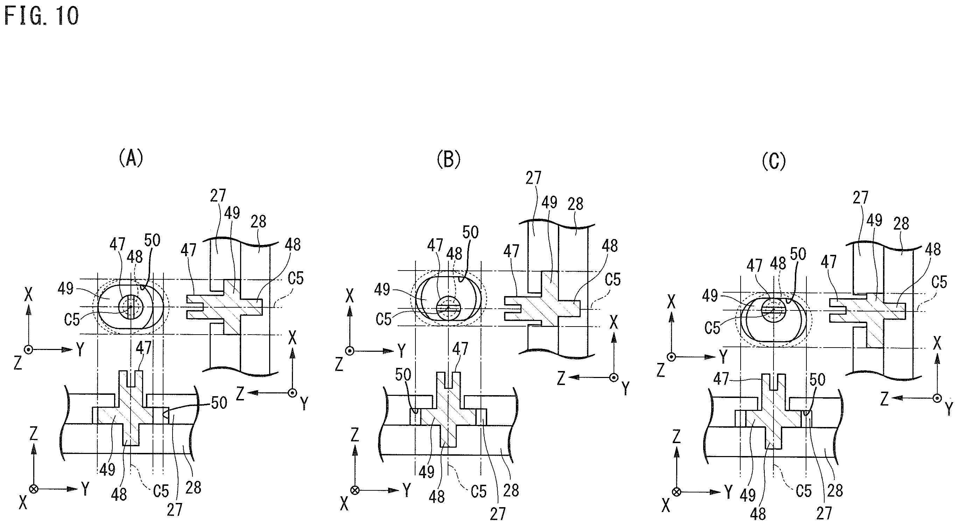

Fig. 10 includes enlarged views illustrating the first rotation member 47. Figs. 10(A) to 10(C) are diagrams illustrating the first rotation member 47 with different rotation angles. Fig. 10(A) is a plan view viewed from the +Z direction, Fig. 10(B) is a sectional view viewed from the -Y direction, and Fig. 10(C) is a sectional view viewed from the +X direction.

As illustrated in Fig. 10(A), the first rotation member 47 includes an engagement shaft 48 and an eccentric shaft 49. The engagement shaft 48 is columnar and is supported by the surface plate member 28 of the body 6 in a rotatable manner. The engagement shaft 48 is supported rotatable about a rotation center C5 that is in parallel with the Z direction. The eccentric shaft 49 is provided on and above the engagement shaft 48. The eccentric shaft 49 is column like (disc shaped) and has a center axis shifted from the rotation center C5 in the XY plane. The mounting member 27 has a first through hole 50. An outer circumference surface of the eccentric shaft 49 is in contact with the inner wall of the first through hole 50. The outer circumference surface of the eccentric shaft 49 is in contact with, in both ends thereof (see the sectional view of the XZ plane) in the right-left direction (X direction), the inner wall of the first through hole 50, and is separated from the inner wall of the first through hole 50 in both ends thereof in the Y direction (see the sectional view of the YZ plane).

In the state of Fig. 10(A), the center of the eccentric shaft 49 is substantially coincident with the center of the first through hole 50 in the X direction, and the center of the eccentric shaft 49 and the center of the first through hole 50 are unaligned from each other in the Y direction. Fig. 10 (B) is obtained by rotating the first rotation member 47 of Fig. 10(A) by +90° (clockwise). In this state, the ends of the eccentric shaft 49 in the +X direction moves in the +X direction from the position in Fig. 10(A) to cause the mounting member 27 to move in the +X direction. Fig. 10(C) is obtained by rotating the first rotation member 47 of Fig. 10(A) by -90° (counterclockwise). In this state, the ends of the eccentric shaft 49 in the -X direction moves in the -X direction from the position in Fig. 10(A) to cause the mounting member 27 to move in the -X direction. This is an example in which the first rotation member 47 is rotated by ±90° from the position in Fig. 10(A), and the mounting member 27 moves in the X direction by the amount of movement in accordance with the rotation angle of the first rotation member 47.

The second rotation member 51 illustrated in Fig. 9 causes, with the same mechanism as that of the first rotation member 47, the lens barrel 5 to vertically move with respect to the mounting member 27. The second rotation member 51 includes an engagement shaft 53 and an eccentric shaft 54. The engagement shaft 53 is provided to the lens barrel 5 in a rotatable manner. The eccentric shaft 54 is inserted to a second through hole 52 provided to the mounting member 27. The outer surface of the eccentric shaft 54 is in contact with the inner wall of the second through hole 52 in the Z direction and is separated away from the inner wall of the second through hole 52 in the X direction. The center of the eccentric shaft 54 is displaced from the center of the engagement shaft 52, and rotation of the engagement shaft 52 presses the outer surface of the eccentric shaft 54 against the inner wall of the second through hole 52 in the Z direction, and as reaction of this pressing, the lens barrel 5 moves in the Z direction. As in the second embodiment, separating a mechanism to perform position adjustment in the right-left direction (for example, the first rotation member 47) from a mechanism to perform position adjustment in the vertical direction (for example, the second rotation member 51) enables a position in the right-left direction and a position in the vertical direction to be adjusted independently from each other, which enables the position adjustment to be performed efficiently precisely. As described above, the binoculars 1 in the second embodiment enable the optical axes to be precisely adjusted relative to the viewpoints of the user in the right-left and the vertical directions. The binoculars 1 may be in such a form that combines the first embodiment and the second embodiment.

A plurality of second rotation members 51 or a plurality of second through holes 52 may be provided. The second rotation member 51 and the second through hole 52 are not limited to those illustrated in Fig. 9. For example, the second rotation member 51 may pass through the second through hole 52 that is provided to the lens barrel 5 and may be supported by the mounting member 27 in a rotatable manner. The second rotation member 51 may be omitted. The second through hole 52 is may be omitted.

### Description of Reference Signs

- 1: binoculars
- 2, 2L, 2R: optical system
- 3, 3L, 3R: optical axis
- 4: center axis
- 5: lens barrel
- 6: body
- 7: focus adjuster
- 8: movable body
- 9: optical axis modifier
- 10: regulator
- 12: objective lens
- 13: eyepiece lens
- 14: focus lens
- 27: mounting member
- 31a, 31b: first guide
- 32, 32a, 32b: first pin
- 33a, 33b,: first guide
- 35, 35a, 35b: force applier
- 36: metal part
- 37a, 37b: second guide
- 38a, 38b: second pin
- 40, 40a, 40b: second groove
- 41: first portion
- 42: second portion
- 43: elastic body
- 45: universal joint
- 46: position adjuster
- 47: first rotation member
- 50: first through hole
- 51: second rotation member
- 52: second through hole
- C1: rotation center
- L1: line
- Pa, Pb: contact position Description of Reference

## Claims

1. Binoculars comprising:
a pair of lens barrels including focus lenses; and
a pair of optical axis modifiers disposed between the pair of lens barrels, the optical axis modifiers causing each of the lens barrels to rotate in a direction in which a distance between the pair of lens barrels is changed for at least one end thereof.

2. The binoculars according to claim 1 comprising a focus adjuster that is disposed between the pair of lens barrels, the focus adjuster causing the focus lenses to move together to adjust focus positions of optical systems including the focus lenses, wherein
each of the optical axis modifiers is disposed between the focus adjuster and one of the lens barrels.

3. The binoculars according to claim 2, wherein each of the optical axis modifiers causes one of the lens barrels to rotate along a surface including the focus adjuster and an optical axis of one of the optical systems.

4. The binoculars according to any one of claims 1 to 3, wherein each of the optical axis modifiers includes a first guide that regulates movement of one of the lens barrels so that the one of the lens barrels rotates with a position between a lens member that is closest to a viewpoint in the optical system and an exit pupil position of the optical system serving as a rotation center.

5. The binoculars according to claim 2 or 3 comprising a body that supports the pair of lens barrels, wherein
each of the optical axis modifiers includes
a mounting member that connects the focus adjuster and one of the lens barrels, the mounting member including a sliding surface which moves by sliding with respect to one surface of the body or one surface of a member fixed to the body,
a force applier that applies force in a direction in which the sliding surface and the one surface of the body or the one surface of the member come close to each other, and
each of the optical axis modifiers causes the one of the lens barrels to rotate along the sliding surface.

6. The binoculars according to claim 5, wherein the body supports each of the lens barrels with the mounting member interposed between the body and the one of the lens barrels.

7. The binoculars according to claim 5 or 6, wherein
each of the optical axis modifiers includes a first guide that regulates movement of one of the lens barrels so that the one of the lens barrels rotates with a position between a lens member that is closest to a viewpoint in the optical system and an exit pupil position of the optical system serving as a rotation center, and
the first guide includes a first groove provided to the mounting member, and a first pin fixed to the body and engaged with the first groove.

8. The binoculars according to claim 7, wherein each of the optical axis modifiers includes an elastic body that applies force to the mounting member so as to cause one end of the first groove and the first pin to be pressed against each other.

9. The binoculars according to claim 7 or 8, wherein a friction coefficient between an inner wall of the first groove and the first pin is 0.4 or less.

10. The binoculars according to any one of claims 5 to 9, comprising:
a movable body that moves together with one of the focus lenses in a direction of an optical axis of one of the optical systems; and
a second guide that causes the mounting member to move along a certain moving path in conjunction with movement of the movable body, wherein
the second guide includes a second pin provided to the movable body, and a second groove provided to the mounting member and engaged with the second pin.

11. The binoculars according to claim 10, wherein the second groove includes a first portion that is in parallel with the optical axis of the one of the optical systems and a second portion that is bent at and extends from the first portion toward right or left with respect to the optical axis of the one of the optical systems.

12. The binoculars according to claim 10 or 11, wherein the movable body is connected to the one of the focus lenses by a universal joint.
